# EUROPEAN PATENT SPECIFICATION

(11) **EP 1 771 293 B1**
(45) Date of publication and mention of the grant of the patent: **11.08.2010**
(21) Application number: 05737492.8
(22) Date of filing: 06.05.2005
(51) Int. Cl.: B29C 53/60, B29C 53/84, B29C 70/32

(54) **A METHOD AND AN APPARATUS FOR FABRICATING AN ESSENTIALLY CYLINDRICALLY SHAPED OBJECT**
VERFAHREN UND VORRICHTUNG ZUR HERSTELLUNG EINES IM WESENTLICHEN ZYLINDRISCH GEFORMTEN OBJEKTS
PROCEDE ET DISPOSITIF DESTINES A LA FABRICATION D'UN OBJET SENSIBLEMENT CYLINDRIQUE

(30) Priority: 07.05.2004 NO 20041890
(43) Date of publication of application: 11.04.2007
(73) Proprietor: Wellstream International Limited, Newcastle-upon-Tyne NE6 3PF (GB)
(72) Inventor: HÅNDE, Olav, N-1386 Asker (NO); JAHR, Dag, Morten, N-1341 Slependen (NO)
(74) Representative: Uno, Jennifer Elizabeth Hayes
(86) International application number: PCT/IB2005/001231
(87) International publication number: WO 2005/108046

(56) References cited:
- EP-A1- 0 423 954
- EP-A1- 0 491 355
- WO-A1-94/20285
- US-A- 4 997 503
- US-A- 5 447 586
- US-A- 5 900 689
- US-A1- 2002 054 968

## Description

### FIELD OF THE INVENTION AND PRIOR ART

The present invention relates to a method for fabricating an essentially cylindrically shaped object, comprising the steps of winding a band-shaped thermoplastic prepreg onto an essentially cylindrically shaped mandrel and consolidating the prepreg, said prepreg comprising a matrix having fibres embedded therein, the prepreg being consolidated by being subjecting to a temperature above the melting temperature of the matrix. The invention also relates to an apparatus for performing the method.

The present invention preferably, but not in any way exclusively, finds its application within the oil and gas industries. In particular, the present invention can be used for light-weight high-strength tubular structures with high chemical resistance. For example flexible risers, flowlines, umbilicals, pressure casings for processing equipment, containers and structural members exposed to fluids and gases at elevated temperatures.

The term "thermoplastic prepreg" refers to a polymer composite comprising fibres embedded in a matrix of thermoplastic polymer material. In order to solidify a thermoplastic prepreg, the prepreg is heated to a temperature above the melting temperature of the matrix, compacted together and then cooled. This solidifying process is called consolidation.

The term "unidirectional prepreg" refers to a prepreg in which the fibres are embedded in the matrix in a unidirectional manner, i.e. a prepreg in which the fibres extend in essentially one and the same direction.

A conventional method for fabricating a cylindrically shaped object by winding and consolidating a band-shaped thermoplastic prepreg is illustrated in Fig. 1 or in US-A-5447586. The prepreg 1 is wound from a supply spool 2 onto a cylindrically shaped mandrel 3 via a winding head 4. During the winding, the prepreg is heated to a temperature above the melting temperature of the prepreg matrix by a heating device 5 that focuses energy to the prepreg at the nip point 6. A preheating oven 7 may also be provided so as to preheat the prepreg before it reaches the nip point. Optionally, other heating devices may be provided so as to heat the prepreg during the winding of the prepreg onto the mandrel. Several layers of composite can be wound and consolidated on top of each other until the desired composite wall thickness has been reached. The consolidation pressure is provided by the back-tension of the prepreg as it is wound onto the mandrel and/or by a compaction roller 8 which is arranged to press the heated prepreg against the mandrel. This method of continuously combined winding and heating is time-consuming and requires complicated and expensive means for directing the energy to the desired location, i.e. to the nip point.

### OBJECT OF THE INVENTION

The object of the present invention is to provide a simplified method for fabricating a cylindrically shaped object by winding and consolidating a band-shaped thermoplastic prepreg.

### SUMMARY OF THE INVENTION

According to the invention, this object is achieved by a method according to claim 1. The inventive method implies that the prepreg is heated for consolidation to a temperature above the melting temperature of the prepreg matrix only after it has been wound in one or several layers onto the mandrel, i.e. the prepeg is wound in a non-molten cold state onto the mandrel. If so desired, a first length of prepreg may be wound onto the mandrel and subsequently heated, and thereafter preferably cooled, whereupon a new length of prepreg is wound on top of the first layer, subsequently heated and thereafter preferably cooled, and so on until all the prepreg to be used for forming the object has been wound onto the mandrel and consolidated. This process may be carried out intermittently or continuously. Optionally, all the prepeg to be used for forming the object may be wound onto the mandrel before the subsequent heating of the prepeg. By winding the prepreg onto the mandrel at a temperature below the melting temperature of the matrix, e.g. at room temperature, and heating to consolidate the prepreg after the formation of the desired number of layers of prepreg on the mandrel, the winding and subsequent heating may be carried out in a simple and efficient manner without requiring any complicated and expensive means for heating at a focused nip point.

In a preferred embodiment according to invention the winding and the subsequent heating are repeated after cooling of the previously consolidated layer or layers of prepeg until the desired wall thickness of the object has been reached.

According to another preferred embodiment of the invention is **characterized in that** said at least one layer of prepreg is formed on the mandrel by winding the prepreg onto the mandrel under back-tension, and that the back-tension of the wound prepreg is maintained during the consolidation, the consolidation pressure being provided by the anisotropic thermal expansion of the wound back-tensioned prepreg. The thermoplastic prepreg has an anisotropic thermal expansion coefficient, the thermal expansion coefficient being considerably larger in the thickness direction of the prepreg as compared to the longitudinal direction. Thus, a specific temperature increase will cause a considerably larger expansion of the prepreg in the thickness direction than in the longitudinal direction. Due to the thickness increase of the prepreg and the lack of matching thermal elongation, a tension will develop in an already taught prepreg forcing it towards the underlying mandrel. Thus, the required consolidation pressure will be achieved in a simple and efficient manner in connection with the heating of the prepreg.

Further preferred embodiments of the inventive method will appear from the independent claims and the subsequent description.

The invention also relates to an apparatus for performing the inventive method having the features defined in claim 17.

Preferred embodiments of the inventive apparatus will appear from the independent claims and the subsequent description.

### BRIEF DESCRIPTION OF THE DRAWINGS

The invention will in the following be more closely described by means of embodiment examples, with reference to the appended drawing, where:
Fig. 1 is a schematical illustration of a previously known method for fabricating a cylindrically shaped object by winding and consolidating a band-shaped thermoplastic prepreg,
Fig. 2 is a schematical illustration of an apparatus according to a first embodiment of the present invention as seen during the winding of a band-shaped prepreg onto a mandrel,
Fig. 3 is a schematical illustration of the apparatus according to Fig. 2 as seen during the heating of one or several layers of wound prepreg,
Fig 4 is a schematical illustration of a method according to the present invention as seen during the winding step,
Fig. 5 is a schematical illustration of a method according to the present invention as seen during the heating step, and
Fig. 6 is a schematical illustration of an apparatus according to a second embodiment of the present invention.

### DETAILED DESCRIPTION OF PREFERRED EMBODIMENTS OF THE INVENTION

The invention relates to a method for fabricating an essentially cylindrically shaped object, comprising the step of winding a band-shaped thermoplastic prepreg onto an essentially cylindrically shaped mandrel at a temperature below the melting temperature of the prepreg matrix so as to form one or several layers of prepreg on the mandrel. The thus formed layer or layers of wound prepreg is/are thereafter, in a subsequent step, subjected to a temperature above the melting temperature of the matrix so as to consolidate the prepreg by heating the wound prepreg. Consequently, the prepreg is heated and consolidated only after it has been wound in a desired number of layers on the mandrel. In order to achieve the desired composite wall thickness new layer(s) of prepeg can be wound on top of the consolidated layer or layers by repeating the process of winding and subsequent heating and consolidation of the prepeg, preferably after the cooling thereof.

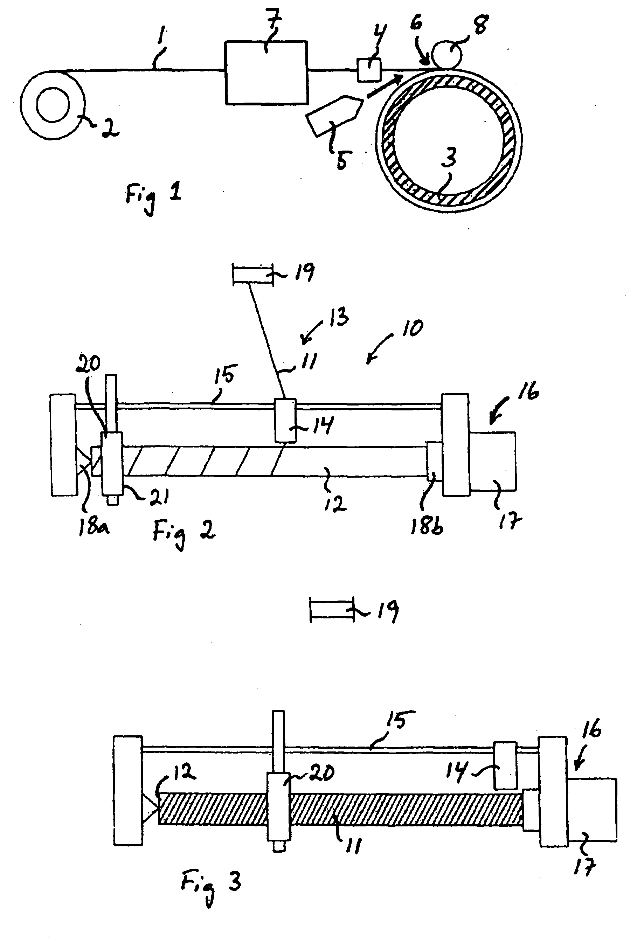

A first embodiment of an apparatus 10 for performing the inventive method is schematically illustrated in a lateral view in Figs. 2 and 3. In Fig. 2 the apparatus is shown during the step of winding a band-shaped thermoplastic prepreg 11 onto a mandrel 12 and in Fig. 3 the apparatus is shown during the subsequent step of heating and consolidating the wound prepreg. The apparatus comprises a winding device 13 arranged to apply at least one layer of band-shaped thermoplastic prepreg 11 onto an essentially cylindrically shaped mandrel 12 by winding the prepreg about the mandrel at a temperature below the melting temperature of the matrix of the prepreg, e.g. at room temperature. The one or more layers of prepeg is/are accordingly wound onto the mandrel in a non-molten cold state, whereafter the winding may be interrupted and the prepeg is heated and consolidated. This process can be repeated until the desired wall thickness of the object has been reached.

The winding device comprises a winding head 14, through which the prepreg is applied at a desired location of the mandrel 12. The winding head 14 is here displaceably mounted on a holder 15 extending along the mandrel 12 so as to be displaceable along the mandrel in the longitudinal direction thereof. Suitable means (not shown) is provided for displacing the winding head 14 along the holder 15. The winding device 13 further comprises means 16 for rotating the mandrel 12 about its longitudinal axis. Said means 16 comprises a driving member 17, e.g. in the form of a motor, which is drivingly connected to one end of the mandrel 12 in order to rotate the mandrel. The mandrel 12 is rotatably supported at its ends by means of suitable supporting members 18a, 18b. The prepreg 11 is provided on a supply spool 19 rotatably supported by a suitable holder (not shown). When one or several layers of prepreg is to be formed on the mandrel 12, the outer end of the prepreg band 11 is initially drawn through the winding head 14 and fixed to the mandrel, whereupon the mandrel is rotated. As the mandrel rotates, the prepreg is being unreeled from the supply spool 19 and fed through the winding head 14 onto the mandrel. The winding head 14 is displaced along the rotating mandrel 12 so as to helically wind the prepreg onto the mandrel for the formation of one or several layers of prepreg thereon.

The apparatus 10 further comprises a heating device 20 arranged to apply heat to the layer or layers of prepreg 11 wound onto the mandrel 12 so as to thereby consolidate the wound prepreg. The heating device 20 is preferably arranged to apply the heat to the outwardly facing surface of the wound layer or layers of prepreg in an essentially symmetrical manner with respect to the longitudinal axis of the mandrel 12. The heating device suitably comprises a heating chamber 21, which is open at two opposite ends so as to allow the mandrel 12 to pass through the heating chamber. In the embodiment illustrated in Figs. 2 and 3, the heating device 20 is displaceably mounted on the holder 15 so as to be displaceable along the mandrel in the longitudinal direction thereof. Suitable means (not shown) is provided for displacing the heating device 20 along the holder 15. The prepeg wound onto the mandrel 12 is consolidated by moving the heating device 20 along the mandrel so as to subject the prepeg to a temperature above the melting temperature of the matrix and thereafter allowing the prepeg to cool. After cooling the process can be repeated until the desired composite wall thickness has been reached.

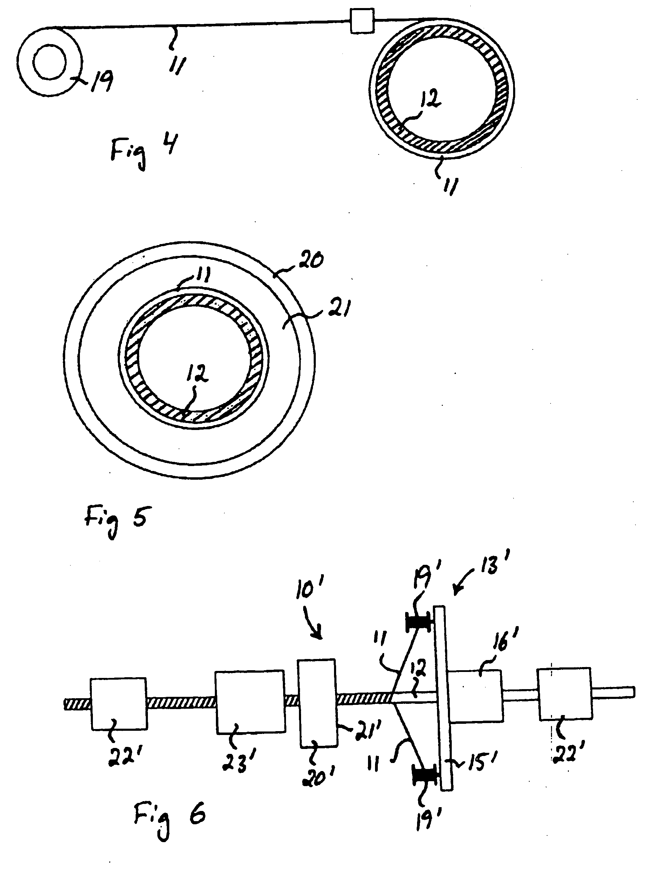

Fig. 4 illustrates the step of winding the prepreg 11 onto the mandrel 12. The mandrel 12 is here illustrated in a cross-sectional view. Fig. 5 illustrates the step of heating the layer or layers of prepreg 11 wound onto the mandrel 12 by means of a heating device 20 surrounding the mandrel. The mandrel 12 and the heating device 20 are here illustrated in a cross-sectional view.

A second embodiment of an apparatus 10' for performing the inventive method is schematically illustrated in a lateral view in Fig. 6. The apparatus 10' comprises a winding device 13' arranged to apply at least one layer of band-shaped thermoplastic prepreg 11 onto an essentially cylindrically shaped mandrel 12 by winding the prepreg about the mandrel at a temperature below the melting temperature of the matrix of the prepreg. The winding device 13' comprises a holder 15' which rotatably supports two prepreg supply spools 19' arranged on opposite sides of the mandrel 12. Alternatively, the holder 15' may support only one supply spool 19' or more than two supply spools 19'. The winding device 13' further comprises means 16' for rotating the holder 15' and thereby the supply spools 19' about the longitudinal axis of the mandrel 12. The apparatus 10' further comprises means 22' for displaceably supporting the mandrel 12 and feeding the mandrel in its longitudinal direction past the winding device 13'.

When one or several layers of prepreg is to be formed on the mandrel 12, the outer end of the prepreg band 11 from the respective supply spool 19' is initially fixed to the mandrel 12, whereupon the holder 15' is rotated and the mandrel 12 displaced in its longitudinal direction. As the holder 15' rotates and the mandrel 12 is displaced past the winding device 13', the prepreg is being unreeled from the respective supply spool 19' onto the mandrel in a helical path for the formation of one or several layers of prepreg thereon.

The apparatus 10' further comprises a heating device 20' arranged to apply heat to the layer or layers of prepreg 11 wound onto the mandrel 12 so as to thereby consolidate the wound prepreg. The heating device 20' is preferably arranged to apply the heat to the outwardly facing surface of the wound layer or layers of prepreg in an essentially symmetrical manner with respect to the longitudinal axis of the mandrel 12. The heating device suitably comprises a heating chamber 21', which is open at two opposite ends so as to allow the mandrel 12 to pass through the heating chamber. In the embodiment illustrated in Fig. 6, the heating device 20' is fixed and the prepreg wound onto the mandrel 12 is consolidated by moving the mandrel 12 through the heating device 20' so as to subject the prepreg to a temperature above the melting temperature of the matrix and thereafter allowing the prepreg to cool. After cooling the process can be repeated until the desired composite wall thickness has been reached.

The heated prepreg layer or layers may be cooled by the ambient air. Optionally, a cooling device may be arranged to cool the prepreg in order to accelerate the cooling. In the embodiment illustrated in Fig. 6, the mandrel 12 is displaced through a cooling device 23' after having been displaced through the heating device 20'.

The heating device 20, 20' is preferably arranged to apply heat to the wound layer or layers of prepreg by emitting electromagnetic radiation in the form of laser radiation, infrared radiation or microwave radiation. However, the heating device may also be arranged to heat the wound layer or layers of prepreg by means of hot gases and/or open flames and/or by contact heat and/or vibration, e.g. by means of ultra sound, and/or electrical resistance or by any suitable combination of the above-mentioned heating methods.

The prepreg is preferably wound onto the mandrel under back-tension and the back-tension of the wound prepreg is maintained during the consolidation, the consolidation pressure being provided by the anisotropic thermal expansion of the wound back-tensioned prepreg. The wound prepreg band 11 is suitably secured at the respective end of the winding on the mandrel 12 and may also be secured to the mandrel at other discrete points along the winding. The wound prepreg is e.g. secured to the mandrel by spot welding, by clamping or by means of an adhesive. The consolidation pressure is regulated in dependence on the pretension of the wound prepreg and the anisotropic thermal expansion of the wound prepreg caused by the temperature difference between the winding step and the consolidation step. The outwardly facing surface of the wound prepreg is suitably maintained uncovered during the consolidation.

The prepreg used may comprise any suitable type of fibres, such as e.g. carbon fibres, Kevlar fibres or glass fibres. The fibres may e.g. be in the form of woven fabrics, tows or yarns. The fibres are embedded in a thermoplastic polymer matrix. Preferably, a unidirectional prepreg is used for forming said at least one layer of prepreg. Preferably, a prepreg tape is used for forming said at least one layer of prepreg. The prepreg tape may comprise 30-80% by volume of fibre and is suitably not provided with any pressure sensitive adhesive or any other means of tackiness. The thickness of the prepreg tape will typically be about 0.1-0.5 mm and the width typically about 5-25 mm.

The mandrel 12 has the form of an essentially cylindrically shaped rod or tube, i.e. a cylindrically or near cylindrically shaped rod or tube. The mandrel may be tapered. The mandrel may be of any suitable material, such as e.g. metal or thermoplastics. The mandrel can be a part of the finished product by being welded to the composite during the first consolidation or the mandrel can be removed after the last consolidation. The mandrel suitably is at room temperature or close to room temperature when the prepreg is wound onto the mandrel.

If so desired, the prepreg may be wound onto the mandrel by hand.

The invention is of course not in any way restricted to the preferred embodiments described above. On the contrary, many possibilities to modifications thereof will be apparent to a person with ordinary skill in the art without departing from the basic idea of the invention such as defined in the appended claims.

## Claims

1. A method for fabricating an essentially cylindrically shaped object, comprising the steps of winding a band-shaped thermoplastic prepreg (11) onto an essentially cylindrically shaped mandrel (12) and consolidating the prepreg, said prepreg comprising a matrix having fibres embedded therein, the prepreg being consolidated by being subjecting to a temperature above the melting temperature of the matrix, **characterized in that** at least one layer of prepreg (11) is formed on the mandrel (12) by winding the prepreg onto the mandrel at a temperature below the melting temperature of the matrix, the thus formed layer or layers of wound prepreg thereafter being subjected to a temperature above the melting temperature of the matrix so as to consolidate the prepreg by heating the wound prepreg.

2. A method according to claim 1, **characterized in that** the winding and the subsequent heating is repeated after cooling of the previously consolidated layer or layers of prepeg (11) until the desired wall thickness of the object has been reached.

3. A method according to claim 1, **characterized in that** all the prepeg to be used for forming the object is wound onto the mandrel (12) before the subsequent heating of the prepeg.

4. A method according to claims 1-3, **characterized in that** said at least one layer of prepreg is formed on the mandrel (12) by winding the prepreg onto the mandrel under back-tension, and that the back-tension of the wound prepreg is maintained during the consolidation, the consolidation pressure being provided by the anisotropic thermal expansion of the wound back-tensioned prepreg.

5. A method according to claims 1-4, **characterized in that** the heat is applied to the outwardly facing surface of the wound prepreg in an essentially symmetrical manner with respect to the longitudinal axis of the mandrel.

6. A method according to any of the preceding claims, **characterized in that** a unidirectional prepreg is used for forming said at least one layer of prepreg.

7. A method according to any of the preceding claims, **characterized in that** a prepreg tape is used for forming said at least one layer of prepreg.

8. A method according to any one of the preceding claims, **characterized in that** the wound prepreg is secured to the mandrel (12) at discrete points.

9. A method according to claim 8, **characterized in that** the wound prepreg is secured to the mandrel (12) by spot welding or by clamping or by means of an adhesive.

10. A method according to any of the preceding claims, **characterized in that** the outwardly facing surface of the wound prepreg is maintained uncovered during the consolidation.

11. A method according to any of the preceding claims, **characterized in that** the prepreg is wound onto the mandrel (12) through a winding device (13; 13'), and that the wound prepreg is consolidated when heated in a heating device (20; 20').

12. A method according to claim 11, **characterized in that** a winding head (14) of the winding device and the heating device (20) are moved in the longitudinal direction of the mandrel (12) during the fabrication of the object.

13. A method according to claim 11, **characterized in that** the mandrel (12) is displaced in its longitudinal direction during the fabrication of the object so as to move past the winding device (13') and thereafter pass through the heating device (20').

14. A method according to any of the preceding claims, **characterized in that** the mandrel (12) is rotated about its longitudinal axis during the winding of the prepreg.

15. A method according to any of claims 1-13, **characterized in that** at least one prepreg supply spool (19') is rotated about the mandrel during the winding of the prepreg.

16. A method according to any of the preceding claims, **characterized in that** the consolidation pressure is regulated in dependence on the pretension of the wound prepreg and the anisotropic thermal expansion of the wound prepreg caused by the temperature difference between the winding step and the consolidation step.

17. An apparatus for performing a method according to any of claims 1-16, **characterized in that** the apparatus (10; 10') comprises:
- a winding device (13; 13') arranged to apply at least one layer of thermoplastic prepreg onto a mandrel (12) by winding the prepreg about the mandrel at a temperature below the melting temperature of the matrix of the prepreg, and
- a heating device (20; 20') arranged to subsequently heat the wound layer or layers of prepreg so as to thereby consolidate the wound prepreg.

18. An apparatus according to claim 17, **characterized in that** the heating device (20; 20') is arranged to apply the heat to the outwardly facing surface of the wound layer or layers of prepreg in an essentially symmetrical manner with respect to the longitudinal axis of the mandrel (12).

19. An apparatus according to claim 17 or 18, **characterized in that** the winding device (13) comprises at least one winding head (14) for winding prepreg onto the mandrel.

20. An apparatus according to claim 19, **characterized in that** the apparatus (10) comprises means for moving the winding head (14) and the heating device (20) in the longitudinal direction of the mandrel.

21. An apparatus according to any of claims 17-19, **characterized in that** the apparatus (10') comprises means (22') for moving the mandrel (12) in its longitudinal direction past the winding device (13') and through the heating device (20').

22. An apparatus according to claim 21, **characterized in that** the winding device (13') is provided with means (15', 16') for rotating at least one prepreg supply spool (19') about the mandrel (12).

23. An apparatus according to any of claims 17-22, **characterized in that** the apparatus (10) comprises means (16) for rotating the mandrel (12) about its longitudinal axis.

24. An apparatus according to any of claims 17-23, **characterized in that** the heating device (20; 20') comprises a heating chamber (21; 21'), which is open at two opposite ends so as to allow the mandrel to pass through the heating chamber.

25. An apparatus according to any of claims 17-24, **characterized in that** the heating device (20; 20') is arranged to apply heat to the wound layer or layers of prepreg by emitting electromagnetic radiation in the form of laser radiation, infrared radiation or microwave radiation.

## Patentansprüche

1. Verfahren zur.Herstellung eines im Wesentlichen zylindrisch geformten Objekts, das die folgenden Schritte beinhaltet: Wickeln eines bandförmigem thermoplastischen Prepregs (11) auf einen im Wesentlichen zylindrisch geformten Dorn (12) und Verfestigen des Prepregs, wobei das genannte Prepreg eine Matrix mit darin eingebetteten Fasern umfasst, wobei das Prepreg verfestigt wird, indem es einer Temperatur über der Schmelztemperatur der Matrix ausgesetzt wird, **dadurch gekennzeichnet, dass** wenigstens eine Prepreglage (11) auf dem Dorn (12) durch Wickeln des Prepregs auf den Dorn bei einer Temperatur unter der Schmelztemperatur der Matrix gebildet wird, wobei die so geformte(n) Lage oder Lagen aus gewickeltem Prepreg anschließend einer Temperatur über der Schmelztemperatur der Matrix ausgesetzt wird/werden, um das Prepreg durch Erhitzen des gewickelten Prepregs zu verfestigen.

2. Verfahren nach Anspruch 1, **dadurch gekennzeichnet, dass** das Wickeln und anschließende Erhitzen nach dem Kühlen der zuvor verfestigten Prepreglage oder - lagen (11) wiederholt wird, bis die gewünschte Wanddicke des Objekts erreicht ist.

3. Verfahren nach Anspruch 1, **dadurch gekennzeichnet, dass** das gesamte Prepreg, das zum Bilden des Objekts verwendet werden soll, vor dem anschließenden Erhitzen des Prepregs auf den Dorn (12) gewickelt wird.

4. Verfahren nach den Ansprüchen 1-3, **dadurch gekennzeichnet, dass** die genannte wenigstens eine Prepreglage auf dem Dorn (12) durch Wickeln des Prepregs auf den Dorn unter Rückspannung gebildet wird und dass die Rückspannung des gewickelten Prepregs während der Verfestigung aufrechterhalten wird, wobei der Verfestigungsdruck durch die anisotrope Wärmeausdehnung des gewickelten, unter Rückspannung stehenden Prepregs erzeugt wird.

5. Verfahren nach den Ansprüchen 1-A, **dadurch gekennzeichnet, dass** die Hitze auf die nach außen gewandte Fläche des gewickelten Prepregs in einer im Wesentlichen symmetrischen Weise mit Bezug auf die Längsachse des Doms aufgebracht wird.

6. Verfahren nach einem der vorherigen Ansprüche, **dadurch gekennzeichnet, dass** ein unidirektionales Prepreg zum Bilden der genannten wenigstens einen Prepreglage verwendet wird.

7. Verfahren nach einem der vorherigen Ansprüche, **dadurch gekennzeichnet, dass** ein Prepreg-Streifen zum Bilden der genannten wenigstens einen Prepreglage verwendet wird.

8. Verfahren nach einem der vorherigen Ansprüche, **dadurch gekennzeichnet, dass** das gewickelte Prepreg an diskreten Punkten am Dorn (12) befestigt wird.

9. Verfahren nach Anspruch 8, **dadurch gekennzeichnet, dass** das gewickelte Prepreg durch Punktschweißen oder Festklemmen oder mit einem Klebstoff am Dorn (12) befestigt wird.

10. Verfahren nach einem der vorherigen Ansprüche, **dadurch gekennzeichnet, dass** die nach außen gewandte Fläche des gewickelten Prepregs während des Verfestigens unbedeckt bleibt.

11. Verfahren nach einem der vorherigen Ansprüche, **dadurch gekennzeichnet, dass** das Prepreg durch eine Wickelvorrichtung (13; 13') auf den Dorn (12) gewickelt wird und dass sich das gewickelte Prepreg verfestigt, wenn es in einer Heizvorrichtung (20; 20') erhitzt wird.

12. Verfahren nach Anspruch 11, **dadurch gekennzeichnet, dass** ein Wickelkopf (14) der Wickelvorrichtung und die Heizvorrichtung (20) in Längsrichtung des Doms (12) während der Herstellung des Objekts bewegt werden.

13. Verfahren nach Anspruch 11, **dadurch gekennzeichnet, dass** der Dorn (12) während der Herstellung des Objekts in seiner Längsrichtung verlagert wird, um sich an der Wickelvorrichtung (13') vorbei zu bewegen und anschließend durch die Heizvorrichtung (20') zu laufen.

14. Verfahren nach einem der vorherigen Ansprüche, **dadurch gekennzeichnet, dass** der Dorn (12) während des Wickelns des Prepregs um seine Längsachse gedreht wird.

15. Verfahren nach einem der Ansprüche 1-13, **dadurch gekennzeichnet, dass** wenigstens eine Prepreg-Znführspule (19') während des Wickelns des Prepregs um den Dorn gedreht wird.

16. Verfahren nach einem der vorherigen Anspruche, **dadurch gekennzeichnet, dass** der Verfestigungsdruck in Abhängigkeit von der Vorspannung des gewickelten Prepregs und der anisotropen Wärmeausdehnung des gewickelten Prepregs infolge der Temperaturdifferenz zwischen dem Wicklungsschritt und dem Verfestigungsschritt geregelt wird.

17. Vorrichtung zur Durchführung eines Verfahrens nach einem der Ansprüche 1-16, **dadurch gekennzeichnet, dass** die Vorrichtung (10; 10') Folgendes umfaßt:
- eine Wickelvorrichtung (13; 13'), die so ausgelegt ist, dass sie wenigstens eine Lage aus thermoplastischem Prepreg auf einen Dorn (12) aufbringt, indem sie das Prepreg um den Dorn bei einer Temperatur unter der Schmelztemperatur der Matrix des Prepregs wickelt, und
- eine Heizvorrichtung (20; 20'), die so ausgelegt ist, dass sie anschließend die gewickelte(n) Prepreglage oder -lagen erhitzt, um so das gewickelte Prepreg zu verfestigten.

18. Vorrichtung nach Anspruch 17, **dadurch gekennzeichnet, dass** die Heizvorrichtung (20; 20') so ausgelegt ist, dass sie die Hitze auf die nach außen gewandte Fläche der gewickelten Prepreglage oder -lagen in einer im Wesentlichen symmetrischen Weise mit Bezug auf die Längsachse des Dorns (12) aufbringt.

19. Vorrichtung nach Anspruch 17 oder 18, **dadurch gekennzeichnet, dass** die Wickelvorrichtung (13) wenigstens einen Wickelkopf (14) zum Wickeln des Prepregs auf den Dorn umfasst.

20. Vorrichtung nach Anspruch 19, **dadurch gekennzeichnet, dass** die Vorrichtung (10) ein Mittel zum Bewegen des Wickelkopfs (14) und der Heizvorrichtung (20) in Längsrichtung des Dorns umfasst.

21. Vorrichtung nach einem der Ansprüche 17-19, **dadurch gekennzeichnet, dass** die Vorrichtung (10') ein Mittel (22') zum Bewegen des Doms (12) in seiner Längsrichtung an der Vlrickelvorrichtung (13') vorbei und durch die Heizvorrichtung (20') umfasst.

22. Vorrichtung nach Anspruch 21, **dadurch gekennzeichnet, dass** die Wickelvorrichtung (13') mit einem Mittel (15', 16') zum Drehen von wenigstens einer Prepreg-Zufuhrspule (19') um den Dorn (12) ausgestattet ist.

23. Vorrichtung nach einem der Ansprüche 17-22, **dadurch gekennzeichnet, dass** die Vorrichtung (10) ein Mittel (16) zum Drehen des Doms (12) um seine Längsachse umfasst.

24. Vorrichtung nach einem der Ansprüche 17-23, **dadurch gekennzeichnet, dass** die Heizvorrichtung (20; 20') eine Heizkammer (21; 21') umfasst, die an zwei gegenüberliegenden Enden offen ist, damit der Dorn durch die Heizkammer laufen kann.

25. Vorrichtung nach einem der Ansprüche 17-24, **dadurch gekennzeichnet, dass** die Heizvorrichtung (20; 20') so ausgelegt ist, dass sie Hitze auf die gewickelte(n) Prepreglage oder -lagen aufbringt, indem sie elektromagnetische Strahlung in Form von Laserstrahlung, Lufrarotstrahlung oder Mikrowellenstrahlung emittiert.

## Revendications

1. Procédé destiné à la fabrication d'un objet à forme sensiblement cylindrique, comprenant les étapes consistant à enrouler un pré-imprégné thermoplastique en forme de bande (11) sur un mandrin (12) à forme sensiblement cylindrique et à consolider le pré-imprégné, ledit pré-imprégné comprenant une matrice à laquelle sont intégrées des fibres, le pré-imprégné étant consolidé du fait qu'il est soumis à une température se situant au-dessus de la température de fusion de la matrice, **caractérisé en ce qu'**au moins une couche du pré-imprégné (11) est formée sur le mandrin (12) grâce à l'opération d'enroulement du pré-imprégné sur le mandrin à une température se situant en dessous de la température de fusion de la matrice, la couche ou les couches ainsi formée(s) de pré-imprégné enroulé étant ultérieurement soumise(s) à une température se situant au-dessus de la température de fusion de la matrice de sorte à consolider le pré-imprégné grâce à l'opération consistant à chauffer le pré-imprégné enroulé.

2. Procédé selon la revendication 1, **caractérisé en ce que** l'enroulement et le chauffage ultérieur sont répétés après le refroidissement de la couche ou des couches de pré-imprégné (11) précédemment consolidée(s) jusqu'à ce que l'on atteigne l'épaisseur de paroi désirée de l'objet.

3. Procédé selon la revendication 1, **caractérisé en ce que** la totalité du pré-imprégné destinée à être utilisée pour le formage de l'objet est enroulée sur le mandrin (12) avant le chauffage ultérieur du pré-imprégné,

4. Procédé selon les revendications 1 à 3, **caractérisé en ce que** ladite au moins une couche de pré-imprégné est formée sur le mandrin (12) grâce à l'opération d'enroulement du pré-imprégné sur le mandrin sous une tension vers l'arrière, et **en ce que** la tension vers l'arrière du pré-imprégné enroulé est maintenue pendant la
consolidation, la pression de consolidation étant procurée par la dilatation thermique anisotrope du pré-imprégné enroulé à tension vers l'arrière,

5. Procédé selon les revendications 1 à 4, **caractérisé en ce que** la chaleur est appliquée sur la surface dirigée vers l'extérieur du pré-imprégné enroulé suivant une manière sensiblement symétrique par rapport à l'axe longitudinal du mandrin.

6. Procédé selon l'une quelconque des revendications précédentes, **caractérisé en ce qu'**un pré-imprégné unidirectionnel est utilisé pour former ladite au moins une couche de pré-imprégné.

7. Procédé selon l'une quelconque des revendications précédentes, **caractérisé en ce qu'**un ruban de pré-imprégné est utilisé pour former ladite au moins une couche de pré-imprégné.

8. Procédé selon l'une quelconque des revendications précédentes, **caractérisé en ce que** le pré-imprégné enroulé est fixé sur le mandrin (12) au niveau de points discrets.

9. Procédé selon la revendication 8, **caractérisé en ce que** le pré-imprégné enroulé est fixé sur le mandrin (12) à l'aide d'un soudage par points ou d'éléments de serrage ou au moyen d'un adhésif.

10. Procédé selon l'une quelconque des revendications précédentes, **caractérisé en ce que** la surface dirigée vers l'extérieur du pré-imprégné enroulé est maintenue à l'état découvert pendant la consolidation.

11. Procédé selon l'une quelconque des revendications précédentes, **caractérisé en ce que** le pré-imprégné est enroulé sur le mandrin (12) par l'intermédiaire d'un dispositif d'enroulement (13 ; 13') et que le pré-imprégné enroulé est consolidé lorsqu'il est chauffé dans un dispositif de chauffage (20 ; 20').

12. Procédé selon la revendication 11, **caractérisé en ce qu'**une tête d'enroulement (14) du dispositif d'enroulement et que le dispositif de chauffage (20) sont déplacés suivant le sens longitudinal du mandrin (12) pendant la fabrication de l'objet.

13. Procédé selon la revendication 11, **caractérisé en ce que** le mandrin (12) est déplacé suivant son sens longitudinal pendant la fabrication de l'objet de sorte à passer devant le dispositif d'enroulement (13') et ultérieurement à traverser le dispositif de chauffage (20').

14. Procédé selon l'une quelconque des revendications précédentes, **caractérisé en ce que** le mandrin (12) subit une rotation autour de son axe longitudinal pendant l'enroulement du pré-irziprégné.

15. Procédé selon l'une quelconque des revendications 1 à 13, **caractérisé en ce qu'**au moins une bobine d'alimentation (19') de pré-imprégné subit une rotation autour du mandrin pendant l'enroulement du pré-imprégné.

16. Procédé selon l'une quelconque des revendications précédentes, **caractérisé en ce que** la pression de consolidation est régulée en fonction de la pré-tension du pré-imprégné enroulé et de la dilatation thermique anisotrope du pré-imprégné enroulé causée par la différence de température entre l'étape d'enroulement et l'étape de consolidation.

17. Appareil destiné à réaliser un procédé selon l'une quelconque des revendications 1 à 16, **caractérisé en ce que** l'appareil (10 ; 10') comprend :
- un dispositif d'enroulement (13 ; 13') lequel est agencé de façon à appliquer au moins une couche de pré-imprégné thermoplastique sur un mandrin (12) grâce à l'opération d'enroulement du pré-imprégné autour du mandrin à une température se situant en dessous de la température de fusion de la matrice du pré-imprégné, et
- un dispositif de chauffage (20 ; 20') lequel est agencé de façon à chauffer ultérieurement la couche ou les couches enroulée(s) de pré-imprégné de sorte à consolider ainsi le pré-imprégné enroulé.

18. Appareil selon la revendication 17, **caractérisé en ce que** le dispositif de chauffage (20 ; 20') est agencé de façon à appliquer la chaleur sur la surface dirigée vers l'extérieur de la couche ou des couches enroulée(s) du pré-imprégné suivant une manière sensiblement symétrique par rapport à l'axe longitudinal du mandrin (12).

19. Appareil selon la revendication 17 ou 18, **caractérisé en ce que** le dispositif d'enroulement (13) comprend au moins une tête d'enroulement (14) pour enrouler le pré-imprégné sur le mandrin.

20. Appareil selon la revendication 19, **caractérisé en ce que** l'appareil (10) comprend des moyens destinés à déplacer la tête d'enroulement (14) et le dispositif de chauffage (20) suivant le sens longitudinal du mandrin

21. Appareil selon l'une quelconque des revendications 17 à 19, **caractérisé en ce que** l'appareil (10') comprend des moyens (22') destinés à déplacer le mandrin (12) suivant son sens longitudinal devant le dispositif d'enroulement (13') et à travers le dispositif de chauffage (20').

22. Appareil selon la revendication 21, **caractérisé en ce que** le dispositif d'enroulement (13') est pourvu de moyens (15', 16') destinés à faire tourner au moins une bobine d'alimentation (19') de pré-imprégné autour du mandrin (12).

23. Appareil selon l'une quelconque des revendications 17 à 22, **caractérisé en ce que** l'appareil (10) comprend des moyens (16) destinés à faire tourner le mandrin (12) autour de son axe longitudinal.

24. Appareil selon l'une quelconque des revendications 17 à 23, **caractérisé en ce que** le dispositif de chauffage (20 ; 20') comprend une chambre de chauffe (21 ; 21') qui est ouverte à deux extrémités opposées de sorte à permettre au mandrin de traverser la chambre de chauffe.

25. Appareil selon l'une quelconque des revendications 17 à 24, **caractérisé en ce que** le dispositif de chauffage (20 ; 20') est agencé de sorte à appliquer de la chaleur sur la couche ou les couches enroulée(s) de pré-imprégné grâce à l'émission d'un rayonnement. électromagnétique se présentant sous la forme d'un rayonnement laser, d'un rayonnement infrarouge ou d'un rayonnennent à micro-ondes.
